# FASCICULE DE BREVET EUROPEEN

(11) **EP 2 573 863 B1**
(45) Date de publication et mention de la délivrance du brevet: **16.04.2014**
(21) Numéro de dépôt: 12180396.9
(22) Date de dépôt: 14.08.2012
(51) Int. Cl.: H01M 16/00, H02J 7/00, H01M 6/16, H02J 7/34

(54) **Procédé et dispositif d'alimentation d'un appareil électrique autonome**
Verfahren und Anordnung zur Stromversorgung einer autonomen elektrischen Vorrichtung.
Method and device for supplying power to an autonomous electrical apparatus

(30) Priorité: 22.09.2011 FR 1158428
(43) Date de publication de la demande: 27.03.2013
(73) Titulaire: Air Liquide Services, 75007 Paris (FR)
(72) Inventeur: Bacot, Patrick, 92190 Meudon (FR)
(74) Mandataire: De Cuenca, Emmanuel Jaime

(56) Documents cités:
- EP-A2- 2 079 148
- US-A1- 2008 290 842

## Description

La présente invention concerne dispositif d'alimentation d'un appareil électrique autonome.

L'invention concerne plus particulièrement un dispositif d'alimentation d'un appareil électrique autonome comprenant au moins une pile élémentaire, notamment de type au lithium, la ou les piles étant raccordées entre deux bornes de sortie.

Les systèmes électroniques autonomes qui doivent fonctionner plusieurs années sont très généralement équipées de piles au lithium (lithium chlorure de thionyl). Ces piles présentent une forte densité d'énergie et une autodécharge limitée. Elles souffrent en revanche d'un phénomène pénalisant connu de passivation. Avec le temps et la température, si la pile est peu ou pas sollicitée, une des électrodes se passive ce qui augmente la résistance interne de la pile, jusqu'à la rendre éventuellement inutilisable dans l'application visée.

Le document EP444023B1 décrit une méthode de dé-passivation d'une pile au lithium consistant à tirer du courant de la pile pour la dé-passiver.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement **caractérisé en ce** qu'il comprend une capacité électrique montée en parallèle avec la ou les piles, chaque pile élémentaire et la capacité étant reliée à une borne de sortie via au moins un commutateur respectif, le dispositif comprenant en outre une logique électronique tel qu'un microcontrôleur raccordé auxdits commutateurs pour contrôler sélectivement et de façon indépendante l'état ouvert (non passant) ou fermé (passant) desdits commutateurs.

Chaque pile élémentaire et la capacité sont reliées à une borne de sortie via un premier commutateur respectif, chaque pile élémentaire et la capacité étant également reliées en parallèle à une ligne commune via un second commutateur respectif, les premier et second commutateurs de chaque pile et de la capacité étant reliées en parallèle à une même borne de ladite pile concernée ou de la capacité,

Par ailleurs, des modes de réalisation de l'invention peuvent comporter l'une ou plusieurs des caractéristiques suivantes :
- le ou les commutateurs sont du type MOSFET,
- la capacité est du type EDLC,
- le dispositif est intégré dans un emballage étanche muni d'un connecteur de sortie étanche,
- la logique électronique est configurée pour sélectivement fermer (étant passant) simultanément un second commutateur d'une pile parmi la ou les piles et le second commutateur de la capacité pour réaliser une dé-passivation d'une pile et un chargement de la capacité,
- la logique électronique est configurée pour que, lorsque le courant délivré par le dispositif aux bornes de sortie doit être inférieur à un premier seuil déterminé, la logique électronique assure la fermeture (étant passant) du premier commutateur d'une seule pile élémentaire parmi la ou les piles,
- logique électronique est configurée pour que, lorsque le courant délivré par le dispositif aux bornes de sortie doit être inférieur à un premier seuil déterminé, la logique électronique assure l'ouverture (état non passant) du premier commutateur de la capacité,
- la logique électronique est configurée pour que, lorsque le courant délivré par le dispositif aux bornes de sortie doit être supérieur à un second seuil déterminé, la logique électronique assure la fermeture (état passant) du premier commutateur reliant la capacité à la borne de sortie,
- le dispositif comprend plusieurs piles élémentaires montées en parallèle entre les bornes et en parallèle avec la capacité, la logique électronique étant configurée pour que, lorsque le courant délivré par le dispositif aux bornes de sortie doit être supérieur à un second seuil déterminé, la logique électronique assure la fermeture (état passant) de plusieurs premiers commutateurs reliant des piles élémentaires à la borne de sortie.

L'invention concerne également un procédé d'alimentation d'un appareil électrique au moyen d'un dispositif d'alimentation conforme à l'une quelconque des caractéristiques ci-dessus, dans lequel le procédé comprend une étape de mesure ou de détermination d'une demande de courant de l'appareil électrique inférieur à un premier seuil déterminé, et lorsque le courant demandé par l'appareil électrique est inférieur au premier seuil, une étape de fermeture (état passant) d'un seul premier commutateur de pile parmi la ou les piles élémentaires et l'ouverture (état non passant) du premier commutateur de la capacité.

Chaque plie élémentaire et la capacité sont reliées à une borne de sortie via un premier commutateur respectif, et chaque pile élémentaire et la capacité étant également reliées en parallèle à une ligne commune via un second commutateur respectif, les premier et second commutateurs de chaque pile et de la capacité étant reliées en parallèle à une même borne de ladite pile concernée ou de la capacité, le procédé comprenant une étape de dé-passivation d'au moins une pile en fermant (état passant) sélectivement un second commutateur de pile et le second commutateur de la capacité,

Selon d'autres particularités possibles :
- le procédé comprend plusieurs piles élémentaires montées en parallèle entre les bornes et en parallèle avec la capacité, le procédé comprenant une étape de mesure ou de détermination d'une demande de courant de l'appareil électrique supérieur à un second seuil déterminé et, lorsque le courant demandé par l'appareil électrique est supérieur au second seuil déterminé, une étape de fermeture (état passant) de plusieurs premiers commutateurs reliant des piles élémentaires à la borne,
- l'étape de dé-passivation est réalisée avant ou pendant une phase durant laquelle d'une part un ou plusieurs premiers commutateurs de pile sont fermés (état passant) et, d'autre part, le premier commutateur de la capacité est ouvert (non passant),
- le procédé utilise une interface de communication pour contrôler la configuration et/ou la séquence de commande des commutateurs en fonction des besoins de puissance de l'appareil électrique et/ou pour transmettre des informations sur l'état du dispositif.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure et le fonctionnement d'un premier exemple comparatif,
- la figure 2 représente une vue schématique et partielle illustrant la structure et le fonctionnement d'un deuxième exemple de réalisation possible de l'invention.

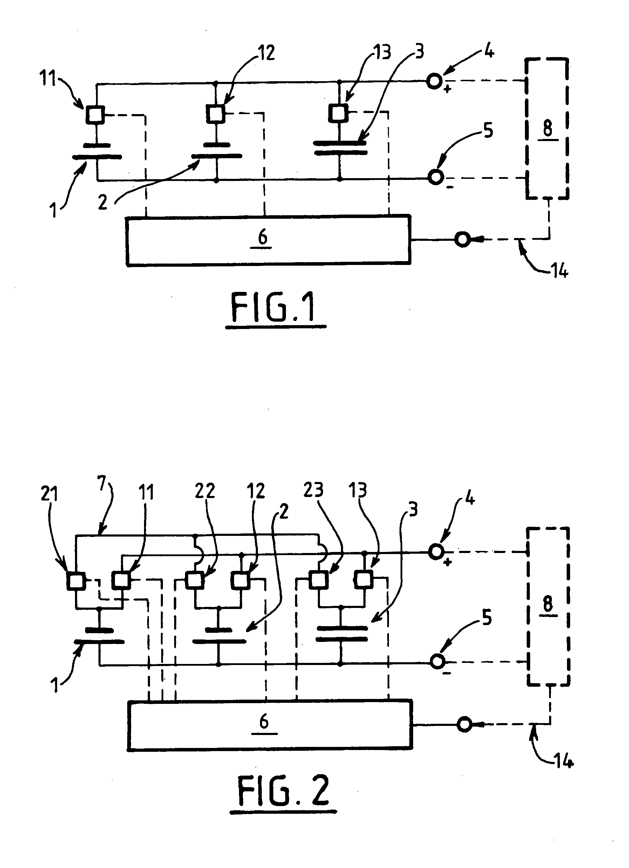

En se référant à la figure 1, le dispositif d'alimentation d'un appareil électrique autonome comprend une pluralité de piles 1, 2 élémentaires, par exemple des piles au lithium. Dans l'exemple non limitatif, le dispositif comprend deux piles 1, 2. Bien entendu, l'invention s'applique également à des arrangements à une seule pile ou trois piles ou plus.

Les deux piles 1, 2 sont montées en parallèle entre deux bornes 4, 5 de sortie du dispositif destinées à reliées à un appareil 8 électrique alimenté électriquement par le dispositif.

Le dispositif comprend également une capacité 3 électrique (c'est à dire un condensateur) montée en parallèle avec les piles 1, 2 entre les bornes 4, 5 de sortie.

Chaque pile 1, 2 élémentaire et la capacité 3 est reliée à une borne 4 de sortie via un premier commutateur 11, 12, 13 respectif. Le dispositif comprend en outre une logique 6 électronique, comportant par exemple un microcontrôleur, raccordé auxdits commutateurs 11, 12, 13 pour contrôler sélectivement et de façon indépendante l'état ouvert (non passant) ou fermé (passant) desdits commutateurs 11, 12, 13.

En fonctionnement dit « normal », par exemple lorsque le dispositif doit fournir un courant dit « moyen », un seul des commutateurs 11, 12 est fermé et la pile correspondante 1, 2 alimente seule la charge 8.

Le choix du commutateur 11, 12 fermé peut être réalisé selon une logique prédéterminée et présentée par la suite. Ceci permet de n'utiliser pratiquement qu'une seule pile 1, 2 à la fois et évite tout risque de perte lié au montage en parallèle (le déchargement d'une pile dans une autre est évité).

Lors d'un appel de courant relativement plus important, les commutateurs 11, 12 des autres piles 1, 2 peuvent également être commutés simultanément de façon à réduire la résistance interne apparente de l'ensemble, et donc la capacité à fournir du courant. L'appel de courant relativement plus important peut par exemple être détecté par une baisse de tension aux bornes 4, 5 de sortie, et/ou par une mesure directe du courant, et/ou par une notification au microcontrôleur par l'application via une interface de communication 14.

Pour diminuer encore la résistance interne de l'ensemble, le commutateur 13 de la capacité (qui était ouvert donc non passant) peut être fermé. Dans cette configuration on bénéficiera alors de la très faible résistance interne du condensateur 3.

La logique de commutation des commutateurs 11, 12, 13 peut être réalisée de façon automatique par le microcontrôleur 2 (passage cyclique d'une pile à une autre par exemple) ou par une commande depuis l'application qui reçoit l'alimentation, ceci en fonction par exemple de critères liés à une analyse fine de la consommation et/ou de la tension des piles 1, 2.

Cette architecture permet de combiner dans un circuit, une ou plusieurs piles 1, 2 et une capacité qui, avec une commutation des différents éléments permet d'optimiser l'énergie disponible et de limiter fortement les phénomènes de passivation. Pour faciliter les opérations de maintenance et permettre un remplacement immédiat de l'ensemble de piles 1, 2, l'ensemble peut être conditionné comme une entité interchangeable.

Le dispositif est configuré pour prévenir ou assurer sélectivement une dé-passivation de la ou des piles 1, 2.

Lors d'un appel de courant dit moyen (ou intermédiaire), le courant est donc concentré sur une seule des piles 1, 2. Ceci qui limite le phénomène de passivation par rapport à un montage classique en parallèle (où le courant se répartit naturellement sur les différentes piles).

De plus, une procédure de dé-passivation peut être également réalisée par le dispositif en fermant simultanément le commutateur 13 de la capacité et le commutateur 11, 12 associé à l'une des piles 1, 2. Il en résulte dans ce cas un courant de charge important, de nature à éliminer la couche isolante responsable du phénomène de passivation.

Les caractéristiques de condensateur de la capacité 3 sont choisies en fonction des caractéristiques des piles 1, 2 utilisées. Cette procédure est appliquée de préférence avant une phase de besoin de puissance pendant laquelle la capacité 3 est utilisée pour réduire encore la résistance interne du dispositif. Cette procédure est plus efficace énergétiquement qu'une simple décharge dans une résistance. En effet, le courant consommé par l'opération de dé-passivation d'une pile 1, 2 est utilisé pour charger la capacité 3, ce qui est indispensable avant son utilisation opérationnelle.

La figure 2 illustre une réalisation de l'invention qui se distingue de celle de la figure 1 uniquement en ce que chaque pile 1, 2 et la capacité 3 comprennent un deuxième commutateur 21, 22, 23pour relier sélectivement les piles 1, 2 et la capacité 3 à une ligne 7 commune. C'est-à-dire que le nombre de commutateurs est doublé pour chaque élément (pile 1, 2 et capacité 3). Cette architecture permet d'alimenter un appareil 8 avec une ou plusieurs piles 1, 2 pendant qu'une autre pile 2, 1 est dépassivée. De préférence, la commutation à la charge est réalisée lorsque la capacité 3 est chargée.

Cette architecture est particulièrement avantageuse pour éviter des creux de tension au moment de la commutation de la capacité 3.

Pour éviter des courants commutés trop importants, en particulier en cas de décharge complète de la capacité, une résistance de faible valeur ou un dispositif électronique limiteur de courant peut être placé en série avec la capacité 3 et/ou chacune des piles 1, 2.

Le dispositif est de préférence constitué d'un nombre quelconque de piles équipées d'un commutateur électronique. Par exemple chaque commutateur est du type MOSFET. La capacité est de préférence un condensateur de forte capacité (par exemple une « supercapacité » ou un EDLC). Le commutateur 13 de la capacité est par exemple un commutateur électronique.

Le microcontrôleur peut ainsi être configuré et programmé pour piloter les commutateurs 11, 12, 13 selon une logique qui minimise les pertes et le phénomène de passivation et maximise à la fois la capacité en fourniture d'énergie et en courant de pointe.

Le dispositif peut être avantageusement conditionné dans un emballage étanche, par exemple de forme cylindrique (ce qui correspond à la forme des piles standard), se terminant par un connecteur étanche. L'ensemble peut être verrouillé par une bague anti-vandalisme nécessitant l'utilisation d'un outil spécifique pour le démontage du dispositif.

## Revendications

1. Dispositif d'alimentation d'un appareil électrique autonome comprenant au moins une pile (1, 2) élémentaire, notamment de type au lithium, la ou les piles (1, 2) étant raccordées entre deux bornes (4, 5) de sortie, comprenant une capacité (3) électrique montée en parallèle avec la ou les piles (1, 2), chaque pile (1, 2) élémentaire et la capacité (3) étant reliée à une borne (4) de sortie via au moins un commutateur (11, 12, 13) respectif, le dispositif comprenant en outre une logique (6) électronique tel qu'un microcontrôleur raccordé auxdits commutateurs (11, 12, 13) pour contrôler sélectivement et de façon indépendante l'état ouvert (non passant) ou fermé (passant) desdits commutateurs (11, 12, 13), **caractérisé en ce que** chaque pile (1, 2) élémentaire et la capacité (3) sont reliées à une borne (4) de sortie via un premier commutateur (11, 12, 13) respectif, chaque pile (1, 2) élémentaire et la capacité (3) étant également reliées en parallèle à une ligne (7) commune via un second commutateur (21, 22, 23) respectif, les premier (11, 12, 13) et second (21, 22, 23) commutateurs de chaque pile (1, 2) et de la capacité étant reliées en parallèle à une même borne de ladite pile concernée (1, 2) ou de la capacité (3).

2. Dispositif selon la revendication 1, **caractérisé en ce que** le ou les commutateurs (11, 12, 13, 21, 22, 23) sont du type MOSFET.

3. Dispositif selon l'une quelconque des revendications 1 ou 2, **caractérisé en ce que** la capacité (3) est du type EDLC.

4. Dispositif selon l'une quelconque des revendications 1 à 3, **caractérisé en ce qu'il** est intégré dans un emballage étanche muni d'un connecteur de sortie étanche.

5. Dispositif selon l'une quelconque des revendications 1 à 4, **caractérisé en ce que** la logique (6) électronique est configurée pour sélectivement fermer (étant passant) simultanément un second commutateur (21, 22) d'une pile parmi la ou les piles et le second commutateur (23) de la capacité pour réaliser une dé-passivation d'une pile et un chargement de la capacité (3).

6. Dispositif selon l'une quelconque des revendications 1 à 5, **caractérisé en ce que** la logique (6) électronique est configurée pour que, lorsque le courant délivré par le dispositif aux bornes (4, 5) de sortie doit être inférieur à un premier seuil déterminé, la logique électronique assure la fermeture (étant passant) du premier commutateur (11, 12) d'une seule pile élémentaire (1, 2) parmi la ou les piles (1, 2).

7. Dispositif selon la revendication 6, **caractérisé en ce que** la logique (6) électronique est configurée pour que, lorsque le courant délivré par le dispositif aux bornes (4, 5) de sortie doit être inférieur à un premier seuil déterminé, la logique électronique assure l'ouverture (état non passant) du premier commutateur (13) de la capacité (3).

8. Dispositif selon l'une quelconque des revendications 1 à 7, **caractérisé en ce que** la logique (6) électronique est configurée pour que, lorsque le courant délivré par le dispositif aux bornes (4, 5) de sortie doit être supérieur à un second seuil déterminé, la logique électronique assure la fermeture (état passant) du premier commutateur (13) reliant la capacité (3) à la borne (4, 5) de sortie.

9. Dispositif selon l'une quelconque des revendications 1 à 8, **caractérisé en ce qu'il** comprend plusieurs piles (11, 12) élémentaires montées en parallèle entre les bornes (4, 5) et en parallèle avec la capacité (3), et **en ce que** la logique (6) électronique est configurée pour que, lorsque le courant délivré par le dispositif aux bornes (4, 5) de sortie doit être supérieur à un second seuil déterminé, la logique (6) électronique assure la fermeture (état passant) de plusieurs premiers commutateurs (11, 12) reliant des piles élémentaires (1, 2) à la borne (4) de sortie.

10. Procédé d'alimentation d'un appareil électrique au moyen d'un dispositif d'alimentation conforme à l'une quelconque des revendications 1 à 9, **caractérisé en ce qu'il** comprend une étape de mesure ou de détermination d'une demande de courant de l'appareil électrique (8) inférieur à un premier seuil déterminé, et lorsque le courant demandé par l'appareil électrique (8) est inférieur au premier seuil, une étape de fermeture (état passant) d'un seul premier commutateur (11, 12) de pile parmi la ou les piles élémentaires (1, 2) et l'ouverture (état non passant) du premier commutateur (13) de la capacité (3), **caractérisé en ce que** chaque pile (1, 2) élémentaire et la capacité (3) sont reliées à une borne (4, 5) de sortie via un premier commutateur (11, 12, 13) respectif, et chaque pile (1, 2) élémentaire et la capacité (3) étant également reliées en parallèle à une ligne (7) commune via un second commutateur (21, 22, 23) respectif, les premier (11, 12, 13) et second (21, 22, 23) commutateurs de chaque pile (1, 2) et de la capacité étant reliées en parallèle à une même borne de ladite pile concernée (1, 2) ou de la capacité (3), le procédé comprenant une étape de dé-passivation d'au moins une pile (11, 12) en fermant (état passant) sélectivement un second commutateur (21, 22) de pile et le second commutateur (23) de la capacité.

11. Procédé selon la revendication 10, **caractérisé en ce que** le dispositif d'alimentation comprend plusieurs piles (11, 12) élémentaires montées en parallèle entre les bornes (4, 5) et en parallèle avec la capacité (3), et **en ce qu'**il comprend une étape de mesure ou de détermination d'une demande de courant de l'appareil électrique (8) supérieur à un second seuil déterminé et, lorsque le courant demandé par l'appareil électrique (8) est supérieur au second seuil déterminé, une étape de fermeture (état passant) de plusieurs premiers commutateurs (11, 12) reliant des piles élémentaires (1, 2) à la borne (4, 5).

12. Procédé selon la revendication 11, **caractérisé en ce que** l'étape de dé-passivation est réalisée avant ou pendant une phase durant laquelle d'une part un ou plusieurs premiers commutateurs (11, 12) de pile sont fermés (état passant) et, d'autre part, le premier commutateur (13) de la capacité (3) est ouvert (non passant).

13. Procédé selon l'une quelconque des revendications 10 à 12 **caractérisé en ce qu'il** utilise une interface de communication pour contrôler la configuration et/ou la séquence de commande des commutateurs (11, 12, 13 ; 21, 22, 23) en fonction des besoins de puissance de l'appareil électrique (8) et/ou pour transmettre des informations sur l'état du dispositif.

## Patentansprüche

1. Vorrichtung zur Stromversorgung eines autonom elektrischen Geräts, das mindestens eine Batteriezelle (1, 2), insbesondere vom Lithiumtyp, umfasst, wobei die Batterie oder Batterien (1, 2) zwischen zwei Ausgangsklemmen (4, 5) angeschlossen sind, die einen mit der oder den Batterien (1, 2) parallel geschalteten elektrischen Kondensator (3) umfasst, wobei jede Batteriezelle (1, 2) und der Kondensator (3) über mindestens einen jeweiligen Schalter (11, 12, 13) mit einer Ausgangsklemme (4) verbunden sind, wobei die Vorrichtung ferner eine elektronische Logik (6) umfasst, wie einen Mikrocontroller, der an die Schalter (11, 12, 13) angeschlossen ist, um den offenen Zustand (Sperrzustand) oder geschlossenen Zustand (Durchlasszustand) der Schalter (11, 12, 13) selektiv und unabhängig zu steuern, **dadurch gekennzeichnet, dass** jede Batteriezelle (1, 2) und der Kondensator (3) über einen jeweiligen ersten Schalter (11, 12, 13) mit einer Ausgangsklemme (4) verbunden sind, wobei jede Batteriezelle (1, 2) und der Kondensator (3) auch über einen jeweiligen zweiten Schalter (21, 22, 23) mit einer gemeinsamen Leitung (7) parallel verbunden sind, wobei der erste (11, 12, 13) und zweite (21, 22, 23) Schalter von jeder Batterie (1, 2) und des Kondensators parallel mit einer selben Klemme der betreffenden Batterie (1, 2) oder des Kondensators (3) verbunden sind.

2. Vorrichtung nach Anspruch 1, **dadurch gekennzeichnet, dass** der oder die Schalter (11, 12, 13, 21, 22, 23) vom Typ MOSFET sind.

3. Vorrichtung nach einem der Ansprüche 1 oder 2, **dadurch gekennzeichnet, dass** der Kondensator (3) vom Typ EDLC ist.

4. Vorrichtung nach einem der Ansprüche 1 bis 3, **dadurch gekennzeichnet, dass** sie in eine dichte Hülle integriert ist, die mit einem dichten Ausgangsverbinder versehen ist.

5. Vorrichtung nach einem der Ansprüche 1 bis 4, **dadurch gekennzeichnet, dass** die elektronische Logik (6) konfiguriert ist, um einen zweiten Schalter (21, 22) einer Batterie unter dem oder den Batterie/n und den zweiten Schalter (23) des Kondensators gleichzeitig selektiv zu schließen (Durchlasszustand), um eine Entpassivierung einer Batterie und ein Laden des Kondensators (3) auszuführen.

6. Vorrichtung nach einem der Ansprüche 1 bis 5, **dadurch gekennzeichnet, dass** die elektronische Logik (6) derart konfiguriert ist, dass, wenn der durch die Vorrichtung an die Ausgangsklemmen (4, 5) gelieferte Strom niedriger als eine erste bestimmte Schwelle sein muss, die elektronische Logik das Schließen (Durchlasszustand) des ersten Schalters (11, 12) einer einzigen Batteriezelle (1, 2) unter der oder den Batterie/n (1, 2) gewährleistet.

7. Vorrichtung nach Anspruch 6, **dadurch gekennzeichnet, dass** die elektronische Logik (6) konfiguriert ist, damit, wenn der durch die Vorrichtung an die Ausgangsklemmen (4, 5) gelieferte Strom niedriger als eine erste bestimmte Schwelle sein muss, die elektronische Logik das Öffnen (Sperrzustand) des ersten Schalters (13) des Kondensators (3) gewährleistet.

8. Vorrichtung nach einem der Ansprüche 1 bis 7, **dadurch gekennzeichnet, dass** die elektronische Logik (6) konfiguriert ist, damit, wenn der durch die Vorrichtung an die Ausgangsklemmen (4, 5) gelieferte Strom höher als eine zweite bestimmte Schwelle sein muss, die elektronische Logik das Schließen (Durchlasszustand) des ersten Schalters (13) gewährleistet, der den Kondensator (3) mit der Ausgangsklemme (4, 5) verbindet.

9. Vorrichtung nach einem der Ansprüche 1 bis 8, **dadurch gekennzeichnet, dass** sie mehrere Batteriezellen (11, 12) umfasst, die parallel zwischen den Klemmen (4, 5) und parallel mit dem Kondensator (3) geschaltet sind, und dadurch, dass die elektronische Logik (6) konfiguriert ist, damit, wenn der durch die Vorrichtung an die Ausgangsklemmen (4, 5) gelieferte Strom höher als eine zweite bestimmte Schwelle sein muss, die elektronische Logik (6) das Schließen (Durchlasszustand) von mehreren ersten Schaltern (11, 12) gewährleistet, die die Batteriezellen (1, 2) mit der Ausgangsklemme (4) verbinden.

10. Verfahren zur Stromversorgung eines elektrischen Geräts mittels einer Stromversorgungsvorrichtung nach einem der Ansprüche 1 bis 9, **dadurch gekennzeichnet, dass** es einen Schritt des Messens oder des Bestimmens eines Strombedarfs des elektrischen Geräts (8), der niedriger als eine erste bestimmte Schwelle ist, und, wenn der Strombedarf des elektrischen Geräts (8) niedriger als die erste Schwelle ist, einen Schritt des Schließens (Durchlasszustand) eines einzigen ersten Batterieschalters (11, 12) unter der oder den Batteriezelle/n (1, 2) und das Öffnen (Sperrzustand) des ersten Schalters (13) des Kondensators (3) umfasst, **dadurch gekennzeichnet, dass** jede Batteriezelle (1, 2) und der Kondensator (3) über einen jeweiligen ersten Schalter (11, 12, 13) mit einer Ausgangsklemme (4, 5) verbunden sind und jede Batteriezelle (1, 2) und der Kondensator (3) auch über einen zweiten jeweiligen Schalter (21, 22, 23) parallel mit einer gemeinsamen Leitung (7) verbunden sind, wobei der erste (11, 12, 13) und zweite (21, 22, 23) Schalter von jeder Batterie (1, 2) und des Kondensators parallel mit einer selben Klemme der betreffenden Batterie (1, 2) oder des Kondensators (3) verbunden sind, wobei das Verfahren einen Schritt der Entpassivierung von mindestens einer Batterie (11, 12) durch selektives Schließen (Durchlasszustand) eines zweiten Batterieschalters (21, 22) und des zweiten Schalters (23) des Kondensators umfasst.

11. Verfahren nach Anspruch 10, **dadurch gekennzeichnet, dass** die Stromversorgungsvorrichtung mehrere Batteriezellen (11, 12) umfasst, die parallel zwischen den Klemmen (4, 5) und parallel mit dem Kondensator (3) geschaltet sind, und dadurch, dass es einen Schritt des Messens oder des Bestimmens eines Strombedarfs des elektrischen Geräts (8), der höher als eine zweite bestimmte Schwelle ist, und, wenn der Strombedarf des elektrischen Geräts (8) höher als die zweite bestimmte Schwelle ist, einen Schritt des Schließens (Durchlasszustand) von mehreren ersten Schaltern (11, 12) umfasst, die die Batteriezellen (1, 2) mit der Klemme (4, 5) verbinden.

12. Verfahren nach Anspruch 11, **dadurch gekennzeichnet, dass** der Schritt der Entpassivierung vor oder während einer Phase ausgeführt wird, während der einerseits einer oder mehrere erste Batterieschalter (11, 12) geschlossen werden (Durchlasszustand) und andererseits der erste Schalter (13) des Kondensators (3) geöffnet wird (Sperrzustand).

13. Verfahren nach einem der Ansprüche 10 bis 12, **dadurch gekennzeichnet, dass** es eine Kommunikationsschnittstelle zum Steuern der Konfiguration und/oder der Befehlsfolge der Schalter (11, 12, 13; 21, 22, 23) in Abhängigkeit vom Leistungsbedarf des elektrischen Geräts (8) und/oder zum Übertragen von Informationen über den Zustand der Vorrichtung verwendet.

## Claims

1. Device for supplying power to an autonomous electrical appliance, comprising at least one elementary battery (1, 2), of the lithium type in particular, the one or more batteries (1, 2) being connected between two output terminals (4, 5), comprising an electric capacitor (3) mounted parallel to said one or more batteries (1, 2), each elementary battery (1, 2) and said capacitor (3) being connected to an output terminal (4) via at least one respective switch (11, 12, 13), said device further comprising an electronic logic (6) such as a microprocessor connected to said switches (11, 12, 13) so as to selectively and independently control the off-state (non-conducting) or the on-state (conducting) of said switches (11, 12, 13), **characterised in that** each elementary battery (1, 2) and said capacitor (3) are connected to an output terminal (4) via a first respective switch (11, 12, 13), each elementary battery (1, 2) and said capacitor (3) also being connected in parallel with a common line (7) via a second respective switch (21, 22, 23), said first (11, 12, 13) and second (21, 22, 23) switches of each battery (1, 2) and of said capacitor being connected in parallel with the same terminal of said relevant battery (1, 2) or of said capacitor (3).

2. Device according to claim 1, **characterised in that** said one or more switches (11, 12, 13, 21, 22, 23) are of the MOSFET type.

3. Device according to either claim 1 or claim 2, **characterised in that** said capacitor (3) is of the EDLC type.

4. Device according to any of claims 1 to 3, **characterised in that** it is integrated into a sealed package provided with a sealed output connector.

5. Device according to any of claims 1 to 4, **characterised in that** said electronic logic (6) is configured so as to selectively and simultaneously close (conducting state) a second switch (21, 22) of a battery from among the one or more batteries and said second switch (23) of said capacitor so as to perform the de-passivation of a battery and the loading of said capacitor (3).

6. Device according to any of claims 1 to 5, **characterised in that** said electronic logic (6) is configured so that, when the current delivered by said device to said output terminals (4, 5) has to be below a first determined threshold, said electronic logic ensures the closure (conducting state) of said first switch (11, 12) of a single elementary battery (1, 2) from among the one or more batteries (1, 2).

7. Device according to claim 6, **characterised in that** said electronic logic (6) is configured so that, when the current delivered by said device to said output terminals (4, 5) has to be below a first determined threshold, said electronic logic ensures the opening (non-conducting state) of said first switch (13) of said capacitor (3).

8. Device according to any of claims 1 to 7, **characterised in that** said electronic logic (6) is configured so that, when the current delivered by said device to said output terminals (4, 5) has to be above a second determined threshold, said electronic logic ensures the closure (conducting state) of said first switch (13) connecting said capacitor (3) to said output terminal (4, 5).

9. Device according to any of claims 1 to 8, **characterised in that** it comprises a plurality of elementary batteries (11, 12) mounted in parallel between said terminals (4, 5) and in parallel with said capacitor (3), and **in that** said electronic logic (6) is configured so that, when the current delivered by said device to said output terminals (4, 5) has to be above a second determined threshold, said electronic logic (6) ensures the closure (conducting state) of a plurality of first switches (11, 12) connecting said elementary batteries (1, 2) to said output terminal (4).

10. Method for supplying power to an electrical appliance by means of a power supply device according to any of claims 1 to 9, **characterised in that** it comprises a step of measuring or determining a request for current from said electrical appliance (8) below a first determined threshold and, when the current requested by said electrical appliance (8) is below said first threshold, a step of closing (conducting state) a single first battery switch (11, 12) from among the one or more elementary batteries (1, 2) and of opening (non-conducting state) said first switch (13) of said capacitor (3), **characterised in that** each elementary battery (1, 2) and said capacitor (3) are connected to an output terminal (4, 5) via a first respective switch (11, 12, 13), and each elementary battery (1, 2) and said capacitor (3) are also connected in parallel with a common line (7) via a second respective switch (21, 22, 23), said first (11, 12, 13) and second (21, 22, 23) switches of each battery (1, 2) and of said capacitor being connected in parallel with the same terminal of said relevant battery (1, 2) or of said capacitor (3), said method comprising a step of de-passivation of at least one battery (11, 12) by selectively closing (conducting state) a second battery switch (21, 22) and said second switch (23) of said capacitor.

11. Method according to claim 10, **characterised in that** said power supply device comprises a plurality of elementary batteries (11, 12) mounted in parallel between said terminals (4, 5) and in parallel with said capacitor (3), and **in that** it comprises a step of measuring or determining a request for current from said electrical appliance (8) above a second determined threshold and, when said current requested by said electrical appliance (8) is above said second determined threshold, a step of closing (conducting state) a plurality of first switches (11, 12) connecting said elementary batteries (1, 2) to said terminal (4, 5).

12. Method according to claim 11, **characterised in that** said step of de-passivation is performed before or during a phase during which, on the one hand, one or more first battery switches (11, 12) are closed (conducting state) and, on the other hand, said first switch (13) of said capacitor (3) is open (non-conducting).

13. Method according to any of claims 10 to 12, **characterised in that** it uses a communication interface for controlling the configuration and/or the control sequence of said switches (11, 12, 13; 21, 22, 23) according to the power requirements of said electrical appliance (8) and/or for transmitting information on the state of said device.
